# EUROPEAN PATENT SPECIFICATION

(11) **EP 1 661 791 B1**
(45) Date of publication and mention of the grant of the patent: **12.09.2007**
(21) Application number: 05025695.7
(22) Date of filing: 24.11.2005
(51) Int. Cl.: B62D 5/00

(54) **Variable steering angle mechanism for vehicle steering control apparatus**
Variabler Lenkwinkel-Mechanismus für ein Fahrzeuglenkregelsystem
Mécanisme d'angle de braquage variable pour appareil de contrôle de braquage de véhicule

(30) Priority: 25.11.2004 JP 2004340004
(43) Date of publication of application: 31.05.2006
(73) Proprietor: FUJI KIKO Co., Ltd., Kosai-shi, Shizuoka 431-0431 (JP)
(72) Inventor: Itou, Tadao, Kosai-shi Shizuoka 431-0431 (JP)
(74) Representative: Grünecker, Kinkeldey, Stockmair & Schwanhäusser Anwaltssozietät

(56) References cited:
- EP-A- 1 394 013
- EP-A- 1 561 668
- DE-A1- 10 036 937
- DE-A1- 10 315 704
- US-A- 5 719 459

## Description

The present invention relates to a vehicle steering control apparatus which is equipped with a variable steering angle mechanism using a differential gear unit, and more particularly to a variable steering angle mechanism using a differential gear unit which enables a steering operation as is similar to that of a normal state even when a steering angle increasing/decreasing shaft of the differential gear unit is put in a rotation disabled state, and which improves safety without applying a strange feeling to a driver.

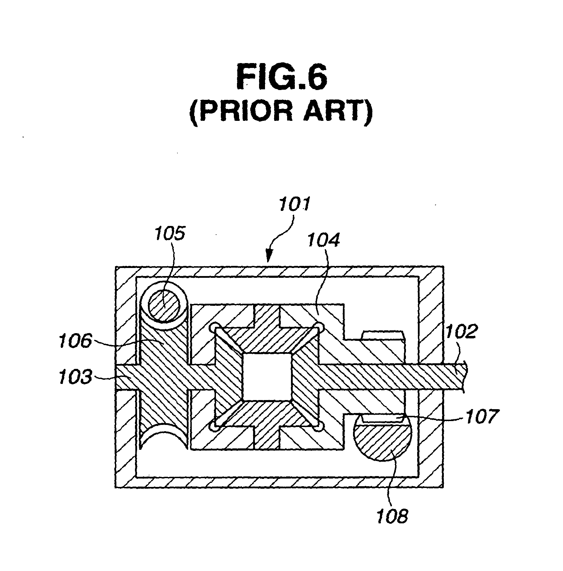

There have been proposed various steering control apparatuses each of which is equipped with a variable steering angle mechanism for varying a ratio between a rotation angle of a steering wheel and a turning angle of steered wheels according to a traveling mode of a vehicle. Japanese Published Utility Model Application No. (Showa)64-6177 discloses a typical variable steering angle mechanism of a differential gear unit 101 as shown in Fig. 6. The differential gear unit 101 is arranged such that a first shaft 102 is used as an input shaft, a second shaft 103 is used as a steering angle increasing/decreasing shaft, and a differential gear casing 104 is used as an output shaft. A worm wheel 106 is provided on the second shaft 103 functioning as a steering angle increasing/decreasing shaft. The worm wheel 106 is rotated by a motor through a worm gear 105, and a rack shaft 108 is driven by a gear portion 107 integrally connected to the differential gear casing 104 functioning as an output shaft. An increasing and decreasing control of a turning angle of the steered wheels is executed by changing a gear ratio of the differential gear unit 101. The changing of the gear ratio is executed by controlling a motor for rotating the steering angle increasing/decreasing shaft 103 according to a traveling state indicative signal.

However, when the second shaft 103 functioning as the steering angle increasing/decreasing shaft is put in a rotation disabled state due to a trouble such that the motor is stopped due to failure or is put in an uncontrollable state, the differential gear casing 104 functioning as the output shaft rotates at an average speed of the first shaft 102 and the second shaft 103, and therefore a rotation angle of the output shaft becomes a half of the rotation angle of the input shaft. Therefore, in case that the second shaft 103 functioning as the steering angle increasing/decreasing shaft is stopped, a driver is required to steer a steering wheel by a very large angle in order to achieve a small radius turn of the vehicle at a low speed.

Since the rotation speed of the differential gear casing 104 functioning as the output shaft becomes an average speed of the input shaft (the first shaft 102) and the steering angle increasing/decreasing shaft (the second shaft 103), the motor attached to the steering angle increasing/decreasing shaft is required to rotate at a very high rotation speed when a vehicle turns with a small radius at a low speed, such as in case of putting the vehicle in a garage. Further, the variable steering angle mechanism having a plurality of gears generates play during a neutral state or a steering back (turning back) state, due to backlash of the gears. This play tends to degrade the steering feeling. Confort the preamble of claim 1 and claim 9, EP1 561 668 A2 discloses a typical variable steering angle mechanism of a differential gear unit comprising: a first gear, a second gear, a third gear, a fourth gear, an input shaft, an output shaft, and a driving device to vary a ratio between the input shaft and the output shaft. The plurality of gears generates play during a neutral state or a steering back (turning back) due to backlash of the gear.

It is therefore an object of the present invention to provide a variable steering angle mechanism using a differential gear unit which avoids said backlash.

An aspect of the present invention resides in a variable steering angle mechanism for a vehicle steering control apparatus, which comprises: a differential gear unit which comprises first, second, third and fourth bevel gears, an input shaft, an output shaft and a differential gear casing, the input shaft being integrally connected to the first bevel gear, the output shaft being integrally connected to the second gear, the output shaft being aligned on an axis of the input shaft, the differential gear casing supporting the third and fourth bevel gears meshed with the first and second bevel gears, the differential gear casing being rotatable on the axis of the input shaft; and a motor which is disposed outside the differential gear casing, the motor rotating the differential gear casing around the axis of the input shaft to vary a ratio between a rotation angle of the input shaft and a rotation angle of the output shaft, and a means for adjusting a position of the third bevel gear In an axial direction and the third bevel gear is disposed In the differential gear casing.

Another aspect of the present invention resides in a steering control apparatus which comprises: a steering wheel; a variable steering angle mechanism comprising a differential gear unit which comprises first, second, third and fourth bevel gears, an input shaft, an output shaft and a differential gear casing, the input shaft being connected to the first bevel gear and the steering wheel, the output shaft being integrally connected to the second gear, the output shaft being aligned on an axis of the input shaft, the differential gear casing supporting the third and fourth bevel gears meshed with the first and second bevel gears, the differential gear casing being rotatable on the axis of the first shaft; a motor which is disposed outside the differential gear casing, the motor rotating the differential gear casing around the axis of the input shaft to vary a ratio between a rotation angle of the input shaft and a rotation angle of the output shaft; and a rack-and-pinion mechanism which is connected to the output shaft, and a means for adjusting a position of the third bevel gear in an axial direction and the third bevel gear is disposed in the differential gear casing.
Fig. 1A is a longitudinal cross-sectional view showing a differential gear unit of a variable steering angle mechanism according to an embodiment of the present invention.
Fig. 1B is a lateral cross-sectional view showing essential parts of the differential gear unit.
Fig. 2 is a lateral cross-sectional view showing a modification of Fig. 1B.
Fig. 3 is a schematic view explaining the variable steering angle mechanism.
Fig. 4A is a schematic view explaining operations of parts of the variable steering angle mechanism according to the embodiment shown in Figs. 1A and 1B.

Fig. 4B is a schematic view explaining operations of parts of the variable steering angle mechanism according to the embodiment shown in Fig. 2.

Fig. 4C is a schematic view explaining operations of parts of a variable steering angle mechanism of a prior art.

Fig. 5A is a graph showing a relationship between a steering-wheel rotation angle (an input-shaft rotation angle) and a tire steered angle in each drive mode.

Fig. 5B is a graph showing a relationship between the input-shaft rotation angle and an output-shaft rotation angle in each drive mode.

Fig. 6 is a cross-sectional view showing a differential gear unit of a variable steering angle mechanism according to a prior art.

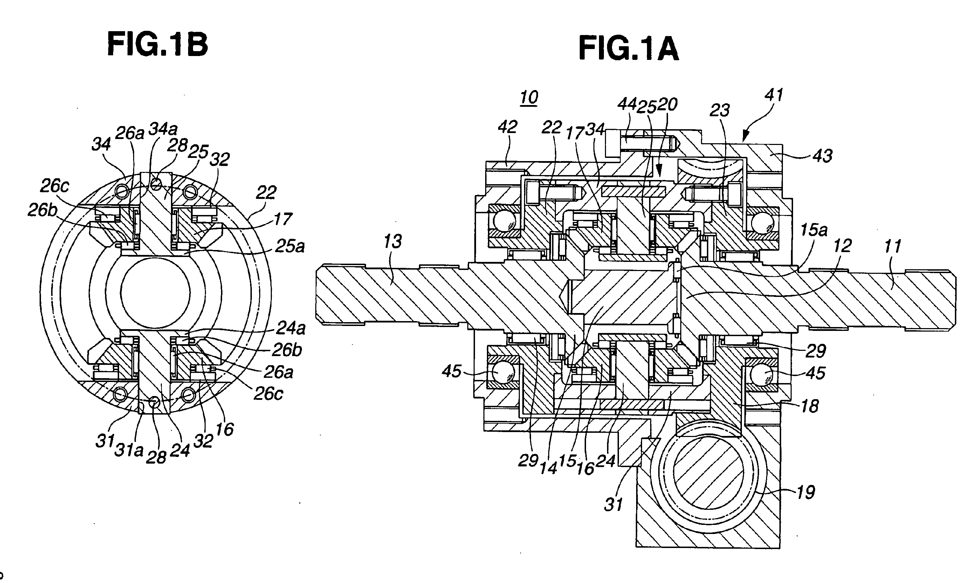

Referring to Figs. 1A through 5B, there is shown an embodiment of a variable steering angle mechanism 1 used in a vehicle steering control apparatus according to the present invention.

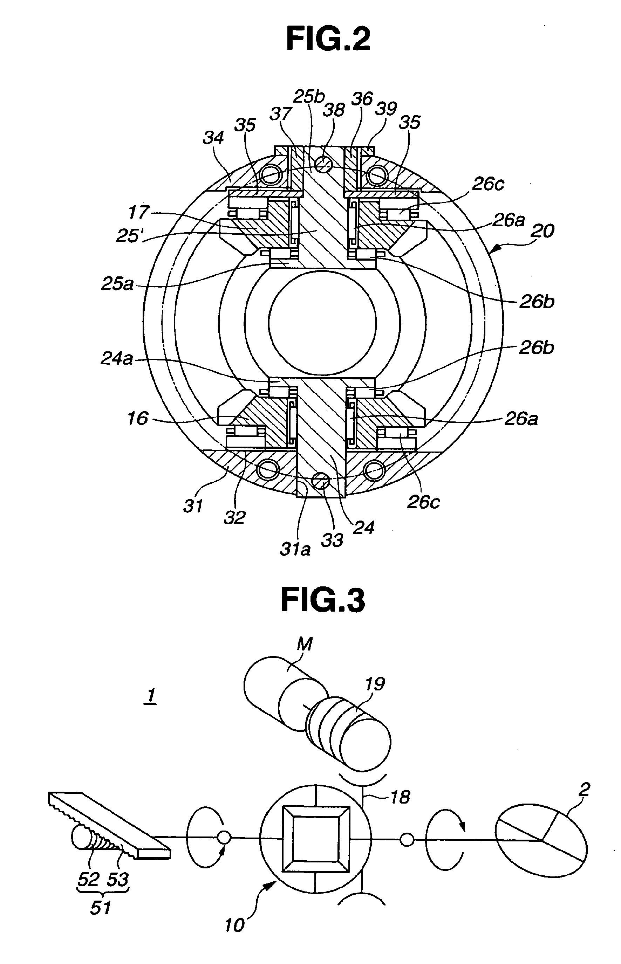

Fig. 1 shows a differential gear unit 10 of the variable steering angle mechanism 1 according to the embodiment of the present invention. The differential gear unit 10 comprises four spiral bevel gears 12, 14, 16 and 17. The spiral bevel gear 12 integrally connected to an end of a first shaft 11 functioning as an input shaft. The other end of the first shaft 11 is connected to a steering wheel 2. A second shaft 13 is aligned with the first shaft 11 so that it are disposed on an axis of the first shaft 11, and functions as an output shaft. An end of the second shaft 13 integrally connected to the spiral bevel gear 14, and the other end of the second shaft 13 is connected to a rack-and-pinion mechanism 51 shown in Fig. 3.

The spiral bevel gears 16 and 17 are disposed on an axis perpendicular to the axis of the first shaft 11, and mesh with the spiral bevel gears 12 and 14. The spiral bevel gears 16 and 17 are rotatably supported by a differential gear casing 20. The differential gear casing 20 is rotatably supported by the first and second shafts 11 and 13 respectively through bearings 29. The differential gear casing 20 functions as a steering angle increasing/decreasing (varying) shaft.

A thrust shaft 15 is disposed between the first shaft 11 and the second shaft 13 in order to maintain the set positions of the spiral bevel gears 12 and 14. A thrust bearing 15a is disposed between the thrust shaft 15 and the first bevel gear 12 to receive a thrust force along the axis of the first shaft 11.

A worm wheel 18 is disposed in the differential gear casing 20 functioning as a steering angle increasing/decreasing shaft. A worm gear 19 for rotating the worm wheel 18 is disposed around the differential gear casing 20. The worm gear 19 meshes with the worm wheel 18. The worm gear 19 is connected to a motor M as shown in Fig. 3. The motor M rotates the worm gear 19 to control the rotation of the differential gear casing 20. The differential gear casing 20 is supported by a housing 41 of the differential gear unit 10 through bearings 45 so as to be rotatable around the axis of the first shaft 11. The housing 41 is constructed by left and right housings 42 and 43 and screws 44 for integrally connecting the left and right housing 42 and 43. The input shaft (first shaft) 11 and the output shaft (second shaft) 13 are supported by the differential gear casing 20 through the bearings 29.

The differential gear casing 20 comprises a pair of circular wall portions 22 and 23 for supporting respectively the first shaft 11 and second shaft 13, and a pair of connecting portions 31 and 34 for connecting with the wall portions 22 and 23. As shown in Fig. 1B, each of the connecting portions 31 and 34 has an arc-shaped outer peripheral surface and a flat inner peripheral surface. The connecting portion 31 and 34 are disposed so that the flat inner peripheral surface of one of the connecting portions 31 and 34 is parallel to the flat inner peripheral surface of the other. A pair of gear supporting shafts 24 and 25 protrude respectively from the connecting portions 31 and 34 toward the common axis of the first and second shafts 11 and 13 while being perpendicular to the flat inner peripheral surfaces.

Flanges 24a and 25a are formed at end portions of the gear supporting shafts 24 and 25, respectively, to prevent the gear supporting shafts 24 and 25 from being drawn out from the wall portions 31 and 34. The spiral bevel gears 16 and 17 are rotatably supported by the gear supporting shafts 24 and 25, respectively, through bearings 26a, 26b and 26c. The gear supporting shafts 24 and 25 for supporting the spiral bevel gears 16 and 17 are inserted into installation holes 31a and 34a of the connecting portions 31 and 34, respectively, and are fixed to the connecting portions 31 and 34 by means of pins 28. Annular plates 32 functioning as shim members are disposed between the connecting portion 31 and the bearing 26c and between the connecting portion 34 and the bearing 26c, respectively.

Fig. 2 shows another gear supporting structure of the differential gear casing which is also employed in the differential gear unit 10 of the variable steering angle mechanism according to the embodiment of the present invention. The spiral bevel gear 16 in the differential gear casing 20 is supported by the gear supporting shaft 24 as is similar to that shown in Fig. 1. The spiral bevel gear 17 opposite to the spiral bevel gear 16 is supported by a gear supporting shaft 25' which is formed so that a base end portion of the gear supporting shaft 25' is slightly smaller than the other portions of the gear supporting shaft 25'. After the spiral bevel gear 17 is installed on the gear supporting shaft 25' through bearing 26a, 26b and 26c, the thin base end portion of the gear supporting shaft 25' is engaged with an annular plate 35 and a cylindrical adjust screw 36, and the gear supporting shaft 25' is then integrally connected with the adjust screw 36 by means of a pin 38. The annular plate 35 is made by spring member and performs an elastic characteristic. The cylindrical adjust screw 36 is for adjusting the axial position of the spiral bevel gear 17. The connecting portion 34 has a screw hole 37, into which the cylindrical adjust screw 36 can be screwed.

The gear supporting shaft 25', on which the spiral bevel gear 17 and the annular plate 35 is installed, is set by screwing the adjust screw 36 from the inner side of the differential gear casing 20 into the screw hole 37 of the of the connecting portion 34, so that the annular plate 35 contacts with the flat inner peripheral surface of the connecting portion 34. Thereafter, the differential gear casing 20 is assembled by installing the wall portions 22 and 23, in which the spiral bevel gears 12 and 14 and the thrust shaft 15 are installed, at both sides of the connecting portions 31 and 34 in which the spiral bevel gears 16 and 17 are installed.

Subsequently, clearances of the spiral bevel gears 12 and 14 relative to the spiral bevel gear 17 are adjusted by moving the gear supporting shaft 25' toward the center axis of the differential gear casing 20. The movement of the gear supporting shaft 25' is executed by screwing the adjust screw 36 with the screw hole 37 toward the center axis. Then, the gear supporting shaft 25' is fixed to the connecting portion (gear supporting shaft installation portion) 34 by locking the cylindrical adjust screw 36 by means of a lock nut 39. During the clearance adjustment of the spiral bevel gears 12 and 14, the plate 35 is deformed into a coned-disc shape and functions as a disc spring. Therefore, the plate 35 biases the spiral bevel gear 17 into the center direction of the differential gear casing 20, and the spiral bevel gear 17 is put in no-backlash state relative to the spiral bevel gears 12 and 14. As is apparent from the comparison between Figs. 1B and 2, a structure of an upper portion of the differential gear unit 10 shown in Fig. 2 is different from that shown in Fig. 1.

Fig. 3 shows a schematic construction of the variable steering angle mechanism 1. The steering wheel 2 is connected to the input shaft 11 of the differential gear mechanism 10. The rack-and-pinion mechanism 51 for steering steered wheels 3 is connected to the output shaft (second shaft) 13. The motor M for varying the steering angle is connected to the worm gear 19 at an outside of the differential gear casing 20. The output shaft 13 rotates in the inverse direction relative to the rotation of the input shaft (first shaft) 11. Therefore, the engagement between a rack 53 and a pinion 52 of the rack-and-pinion mechanism 51 is arranged such that the rotational direction of the output shaft 13 becomes inverse relative to the steering direction of the wheels 3.

Subsequently, there is discussed an operation of the variable steering angle mechanism 1 used in the vehicle steering control apparatus according to the embodiment of the present invention.

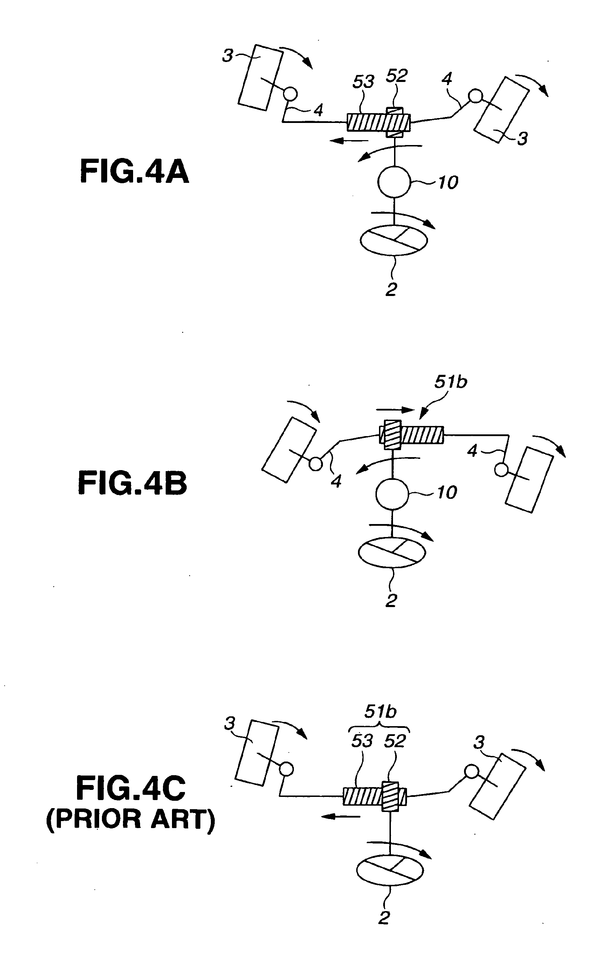

When the steering wheel 2 is steered, the motor M is rotated in reply to a rotation command according to a vehicle traveling condition. The gear ratio of the differential gear unit 19 is variably controlled by the rotation control of the differential gear casing 20. Since the second shaft 13 of the differential gear unit 10 is used as the output shaft 13, the rotational direction of the input shaft 11 becomes opposite to that of the output shaft 13. However, the engagement between the rack 53 and the pinion 52 of the rack-and-pinion mechanism 51 is inversely changed, the steering direction of the steering wheel 2 corresponds with the steering direction of the steered wheels 3, as shown in Fig. 4A.

Instead of changing the engagement between the rack 53 and the pinion 52 of the rack-and-pinion mechanism 51, a connection of each knuckle arm 4 for transforming the axial displacement of the rack into the steering angle may be changed as shown in Fig. 4B, so as to correspond the steering direction of the steering wheel 2 with the steering direction of the steered wheels 3.

Fig. 4C shows a conventional steering control apparatus where the rotational direction of the input shaft corresponds to that of the output shaft, and wherein a rack-and-pinion mechanism 51b is arranged such that the rack 53 is disposed under the pinion 53.

The steering angle of the variable steering angle mechanism 1 according to the embodiment of the present invention is assisted by the differential gear unit 10. More specifically, an steering assist angle is set to be changed according to the vehicle speed, and more specifically to become different in a medium speed range, a low speed range and a high speed range. In the medium speed range, the rotation of the motor M is stopped and therefore the steering assist angle is 0 degree. In the embodiment according to the present invention, a rotation angle ratio between the rotation angle of the input shaft and the rotation angle of the output shaft 13 during the medium speed range is set at a ratio of 1:1. The rotation angle ratio during the high speed range is set at a ratio 1.2:1.0. The rotation angle ratio during the low speed range is set at a ratio 1.2:1.0. The change of the ratio may not be limited to these three steps, and may be set in a larger number of steps according to the vehicle speed.

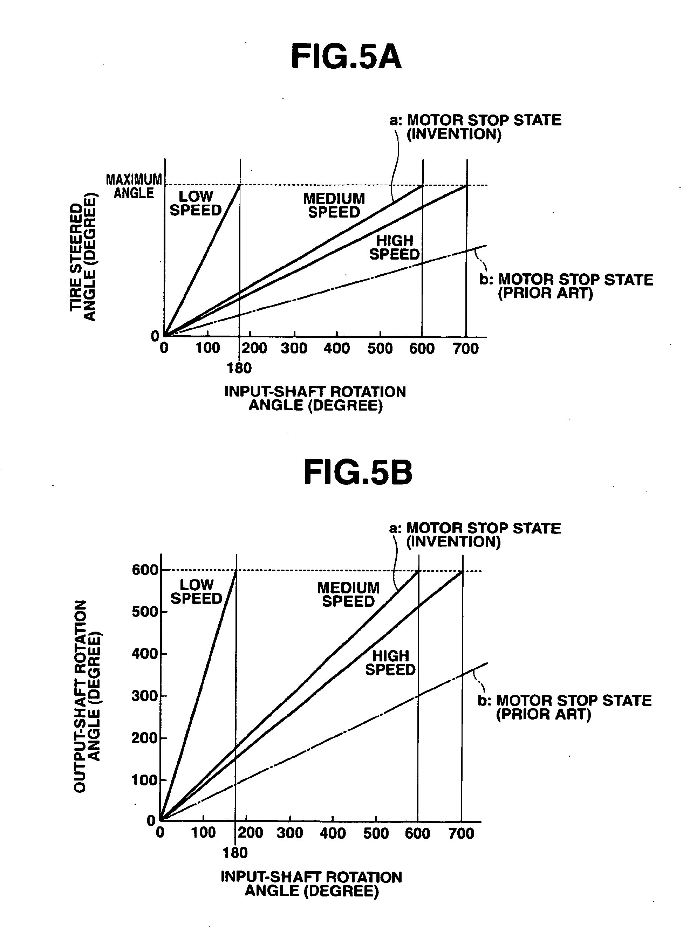

Fig. 5A shows a relationship between a steering-wheel turn angle (input-shaft rotation angle) and a tire (wheel) steered angle in each of the medium speed range, the low speed range, the high speed range, and a motor stop state. Fig. 5B shows a relationship between the steering-wheel turn angle (input-shaft rotation angle) and an output-shaft rotation angle in each of the medium speed range, the low speed range, the high speed, and the motor stop state. TABLE 1 shows rotation angles of the output shaft (second shaft) 13 and the differential gear casing 20 in case that the input shaft (first shaft) 11 is rotated by 180 degrees in each of the medium speed range, the high speed range, the low speed range and the motor stop state, in accordance with the embodiment of the present invention. TABLE 2 shows rotation angles of the output shaft (second shaft) 13 and the differential gear casing 20 in case that the input shaft (first shaft) 11 is rotated by 180 degrees in each of the medium speed range, the high speed range, the low speed range and the motor stop state in accordance with the conventional mechanism.

**TABLE 1**

| | medium speed | high speed | low speed | motor stop state |
|---|---|---|---|---|
| input | 180° | 180° | 180° | 180° |
| output | -180° | -150° | -600° | 90° |
| casing | 0° | 15° | -210° | 0° |

**TABLE 2**

| | medium speed | high speed | low speed | motor stop state |
|---|---|---|---|---|
| input | 180° | 180° | 180° | 180° |
| output | 180° | 150° | 600° | 90° |
| second shaft | 180° | 120° | 1020° | 0° |

Since the conventional differential gear unit is arranged such that a differential gear casing is used as an output shaft, the ratio between the rotation angles of the input shaft and the output shaft becomes 1:0.5 under a condition that no motor assist is obtained (the motor is stopped), as shown in TABLE 2.

In contrast, the differential gear unit 10 according to the embodiment of the present invention is arranged such that the second shaft 13 is used as an output shaft. Therefore, even when the rotation of the differential casing 10 is stopped due to a failure of the motor M and the like, the ratio between the rotation angles of the input shaft and the output shaft becomes 1:1. In case that the motor M is stopped due to failure or put in a trouble such as a uncontrollable condition, even when the turn radius of the vehicle is small under a low speed condition, it is not necessary for a driver to steer the steering wheel 2 by a very large turn angle, as is apparent from a comparison between the relationship a according to the present invention and the relationship b of the prior art shown in Fig. 5A. Further, in case of the differential gear unit 10 according to the embodiment of the present invention, even when the vehicle turns with a small radius at a low speed, such as in a case of putting the vehicle in a garage, the motor M is not required to operate at a very high rotation speed, as is apparent from the comparison between the relationship of the differential gear casing 20 in the low speed case shown in TABLE 1 according to the present invention and the relationship of the second shaft in the lower speed shown in TABLE 2.

In case of the convention differential gear unit, when the second shaft 103 is stopped due to a failure of a motor, it is may be proposed to employ a differential gear unit of doubling the rotation angle of the output shaft, in order to set the ratio between the rotation angles of the input shaft and the output shaft is set at 1:1. However, such an arrangement of the differential gear unit will derive problems of increasing the number of parts and of increasing backlash. In such a case, the rotation angle of the second shaft, which is necessary for obtaining the rotation angle as same as shown in TABLE 1, becomes double in high speed and in low speed, as shown in Table 3. In this conventional variable steering angle mechanism, it is necessary to quickly rotate the steering angle increasing/decreasing shaft according to the increase of the operation speed of the steering wheel. In case of the conventional structure shown in TABLE 3, it is necessary to rotate the second shaft at a speed more than double of the rotation speed of the steering wheel.

In contrast, the present invention is arranged to rotate the differential gear casing 20 at a speed slightly higher than the speed of the steering wheel 2. This obtains an advantage in a following-up ability.

**TABLE 3**

| | medium speed | high speed | low speed | motor stop state |
|---|---|---|---|---|
| input | 180° | 180° | 180° | 180° |
| output | 90° | 75° | 300° | 90° |
| second shaft | 0° | -30° | 420° | 0° |

Further, the bevel gears 12, 14, 16 and 17 of the differential gear unit 10 according to the embodiment of the present invention are spiral bevel gears. Therefore, in case that the gear supporting structure shown in Fig. 2 is employed, the plate 35 functioning as biasing means keeps a condition that the spiral bevel gear 17 does not generate backlash relative to the spiral bevel gear 12 of the first shaft 11 and the spiral bevel gear 14 of the second shaft 13. This improves the differential gear unit 10 in a level of suppressing a play during a neutral state or a steer-back (or turn-back) of the steering wheel 2 at a normal feeling level. Further, the backlash may be adjusted only by the adjusting means of moving the spiral bevel gear 17 in the axial direction, or only the biasing means may be employed.

Although the spiral bevel gears 12, 14, 16 and 17 have been employed in the differential gear unit 10 according to the embodiment of the present invention, the gears are not limited to them. The gears of suppressing the backlash may be employed. Further although the backlash adjustment of the gears has been executed using the plate 35 and the adjust screw 36, the invention is not limited to this.

With the thus arranged variable steering angle mechanism according to the embodiment of the present invention, the second shaft (output shaft) 13 of the differential gear unit 10 functions as an output shaft. Therefore, even when the rotation of the differential gear casing 20 functioning as a steering angle increasing/decreasing shaft is stopped, the input and output shafts 11 and 13 rotate at a speed ratio of 1:1. This enables a driver to steer the steering wheel 2 with a normal feeling even when a small radius turn is carried out at a low speed. Further, even when the steering wheel 2 is quickly turned during a low speed turn such as a case of putting a vehicle in a garage, it is not necessary to rotate the motor M at a very high speed.

Further, since a backlash adjusting means is provided for the differential gears of the differential gear unit 10, the engagements of the gears are always put in no-backlash state. Since the gears smoothly rotate while keeping the normal level as to a play during a neutral state or steering back state, the steering feeling is improved.

## Claims

1. A variable steering angle mechanism (1) for a vehicle steering control apparatus, comprising:
a differential gear unit (10) comprising first (12), second (14), third (17) and fourth (16) bevel gears, an input shaft (11), an output shaft (13) and a differential gear casing (20),
the input shaft (11) being integrally connected to the first bevel gear (12),
the output shaft (13) being integrally connected to the second gear (14), the output shaft (13) being aligned on an axis of the input shaft (11),
the differential gear casing (20) supporting the third (17) and fourth (16) bevel gears meshed with the first (12) and second (14) bevel gears, the differential gear casing (20) being rotatable on the axis of the input shaft (11), and
a motor (M) disposed outside the differential gear casing (20), the motor (M) rotating the differential gear casing (20) around the axis of the input shaft (11) to vary a ratio between a rotation angle of the input shaft (11) and a rotation angle of the output shaft (13),
**characterized in that**
a means for adjusting a position of the third bevel gear (17) in an axial direction and the third bevel gear (17) is disposed in the differential gear casing (20).

2. The variable steering angle mechanism (1) as claimed in claim 1, wherein the third (17) and fourth (16) bevel gears are rotatably supported by the differential gear casing (20), the third (17) and fourth (16) bevel gear being rotatable on an axis perpendicular to an axis of the input shaft (11) and the third (17) and fourth (16) bevel gears meshing with the first (12) and second (14) bevel gears.

3. The variable steering angle mechanism (1) as claimed in claim 2, wherein means for biasing the third bevel gear (17) toward the fourth bevel gear (16) is disposed in the differential gear casing (20).

4. The variable steering angle mechanism (1) as claimed in claim 1, wherein the output shaft (13) is connected to a pinion (52) of a rack-and-pinion mechanism (51), a rack (53) of the rack-and-pinion mechanism (51) being connected to a wheel, the rack (53) meshing with the pinion (52) so that a rotational direction of the output shaft (13) is opposite to a turning direction of steered wheels of the vehicle.

5. The variable steering angle mechanism (1) as claimed in claim 1, wherein the means for adjusting the position of the third bevel gear (17) includes an adjust screw (36) which is connected to a shaft of the third bevel gear (17) and a screw hole(37) of the differential gear casing (20) which is screwed with the adjust screw (36).

6. The variable steering angle mechanism (1) as claimed in claim 5, wherein the means for biasing the third bevel gear (17) includes an annular plate(32) which is disposed between the third bevel gear (17) and the differential gear casing (20) while being deformed into a coned-disc shape.

7. The variable steering angle mechanism (1) as claimed in claim 2, wherein a thrust shaft (15) is disposed between the input shaft (11) and the output shaft (13) in order to maintain the set positions of the first (12) and second (14) bevel gears, a thrust bearing (15a) being disposed between the thrust shaft (15) and the first bevel gear (12).

8. The variable steering angle mechanism (1) as claimed in claim 1, wherein the differential gear casing (20) functions as a steering angle varying shaft and is rotatably supported by the input and output shafts (11, 13) through bearings.

9. A steering control apparatus comprising:
a steering wheel(2);
a variable steering angle mechanism (1) comprising a differential gear unit (10) which comprises first (12), second (14), third (17) and fourth (16) bevel gears, an input shaft (11), an output shaft (13) and a differential gear casing (20), the input shaft (11) being connected to the first bevel gear (12) and the steering wheel(2), the output shaft (13) being integrally connected to the second gear (14), the output shaft (13) being aligned on an axis of the input shaft (11), the differential gear casing (20) supporting the third (17) and fourth (16) bevel gears meshed with the first (12) and
second (14) bevel gears, the differential gear casing (20) being rotatable on the axis of the first shaft (11);
a motor (M) disposed outside the differential gear casing (20), the motor (M) rotating the differential gear casing (20) around the axis of the input shaft (11) to vary a ratio between a rotation angle of the input shaft (11) and a rotation angle of the output shaft (13);
a rack-and-pinion mechanism (51) connected to the output shaft (13),
**characterized in that**
a means for adjusting a position of the third bevel gear (17) in an axial direction and the third bevel gear (17) is disposed in the differential gear casing (20).

## Patentansprüche

1. Variabler Lenkwinkelmechanismus (1) für eine Fahrzeug-Lenksteuervorrichtung, der umfasst:
eine Differentialgetriebeeinheit (10), die ein erstes (12), ein zweites (14), ein drittes (17) und ein viertes (16) Kegelrad, eine Eingangswelle (11), eine Ausgangswelle (13) und ein Differentialgetriebegehäuse (20) umfasst,
wobei die Eingangswelle (11) integral mit dem ersten Kegelrad (12) verbunden ist,
die Ausgangswelle (13) integral mit dem zweiten Kegelrad (14) verbunden ist und die Ausgangswelle (13) auf eine Achse der Eingangswelle (11) ausgerichtet ist,
das Differentialgetriebegehäuse (20) das dritte (17) und das vierte (16) Kegelrad trägt, die mit dem ersten (12) und dem zweiten (14) Kegelrad in Eingriff sind, wobei das Differentialgetriebegehäuse (20) auf der Achse der Eingangswelle (11) gedreht werden kann, und
einen Motor (M), der außerhalb des Differentialgetriebegehäuses (20) angeordnet ist, wobei der Motor (M) das Differentialgetriebegehäuse (20) um die Achse der Eingangswelle (11) dreht, um ein Verhältnis zwischen einem Drehwinkel der Eingangswelle (11) und einem Drehwinkel der Ausgangswelle (13) zu ändern,
**dadurch gekennzeichnet, dass**
eine Einrichtung zum Einstellen einer Position des dritten Kegelrades (17) in einer axialen Richtung vorhanden ist und das dritte Kegelrad (17) in dem Differentialgetriebegehäuse (20) angeordnet ist.

2. Variabler Lenkwinkelmechanismus (1) nach Anspruch 1, wobei das dritte (17) und das vierte (16) Kegelrad drehbar von dem Differentialgetriebegehäuse (20) getragen werden, das dritte (17) und das vierte (16) Kegelrad auf einer Achse senkrecht zu einer Achse der Eingangswelle (11) gedreht werden können und das dritte (17) sowie das vierte (16) Kegelrad mit dem ersten (12) und dem zweiten (14) Kegelrad in Eingriff sind.

3. Variabler Lenkwinkelmechanismus (1) nach Anspruch 2, wobei eine Einrichtung, die das dritte Kegelrad (17) auf das vierte Kegelrad (16) zu spannt, in dem Differentialgetriebegehäuse (20) angeordnet ist.

4. Variabler Lenkwinkelmechanismus (1) nach Anspruch 1, wobei die Ausgangswelle (13) mit einem Ritzel (52) eines Zahnstangen-und-Ritzel-Mechanismus (51) verbunden ist, eine Zahnstange (53) des Zahnstangen-und-Ritzel-Mechanismus (52) mit einem Rad verbunden ist und die Zahnstange (53) mit dem Ritzel (52) so in Eingriff ist, dass eine Drehrichtung der Ausgangswelle (13) entgegengesetzt zu einer Lenkrichtung gelenkter Räder des Fahrzeugs ist.

5. Variabler Lenkwinkelmechanismus (1) nach Anspruch 1, wobei die Einrichtung zum Einstellen der Position des dritten Kegelrades (17) eine Einstellschraube (36), die mit einer Welle des dritten Kegelrades (17) verbunden ist, und ein Schraubloch (37) des Differentialgetriebegehäuses (20) enthält, das mit der Einstellschraube (36) verschraubt ist.

6. Variabler Lenkwinkelmechanismus (1) nach Anspruch 5, wobei die Einrichtung, die das dritte Kegelrad (17) spannt, eine ringförmige Platte (32) enthält, die zwischen dem dritten Kegelrad (17) und dem Differentialgetriebegehäuse (20) angeordnet ist und dabei zu einer Kegelscheibenform verformt wird.

7. Variabler Lenkwinkelmechanismus (1) nach Anspruch 2, wobei eine Drucklagerwelle (15) zwischen der Eingangswelle (11) und der Ausgangswelle (13) angeordnet ist, um die eingestellten Positionen des ersten (12) und des zweiten (14) Kegelrades aufrechtzuerhalten, und ein Drucklager (15a) zwischen der Druckwelle (15) und dem ersten Kegelrad (12) angeordnet ist.

8. Variabler Lenkwinkelmechanismus (1) nach Anspruch 1, wobei das Differentialgetriebegehäuse (20) als eine Lenkwinkel-Änderungswelle wirkt und von der Eingangs- und der Ausgangswelle (11, 13) über Lager getragen wird.

9. Lenk-Steuervorrichtung, die umfasst:
ein Lenkrad (2);
einen variablen Lenkwinkelmechanismus (1), der ein Differentialgetriebeeinheit (10) umfasst, die ein erstes (12), ein zweites (14), ein drittes (17) und ein viertes (16) Kegelrad, eine Eingangswelle (11), eine Ausgangswelle (13) und ein Differentialgetriebegehäuse (20) umfasst, wobei die Eingangswelle (11) mit dem ersten Kegelrad (12) und dem Lenkrad (2) verbunden ist, die Ausgangswelle (13) integral mit dem zweiten Kegelrad (14) verbunden ist, die Ausgangswelle (13) auf eine Achse der Eingangswelle (11) ausgerichtet ist, das Differentialgetriebegehäuse (20) das dritte (17) und das vierte (16) Kegelrad trägt, die mit dem ersten (12) und dem zweiten (14) Kegelrad in Eingriff sind, und das Differentialgetriebegehäuse (20) auf der Achse der ersten Welle (11) gedreht werden kann;
einen Motor (M), der außerhalb des Differentialgetriebegehäuses (20) angeordnet ist wobei der Motor (M) das Differentialgetriebegehäuse (20) um die Achse der Eingangswelle (11) herum dreht, um ein Verhältnis zwischen einem Drehwinkel der Eingangswelle (11) und einem Drehwinkel der Ausgangswelle (13) zu verändern;
einen Zahnstangen-und-Ritzel-Mechanismus (51), der mit der Ausgangswelle (13) verbunden ist,
**dadurch gekennzeichnet, dass**
eine Einrichtung zum Einstellen einer Position des dritten Kegelrades (17) in einer axialen Richtung vorhanden ist und das dritte Kegelrad (17) in dem Differentialgetriebegehäuse (20) angeordnet ist.

## Revendications

1. Mécanisme d'angle de braquage variable (1) pour un appareil de contrôle de braquage de véhicule comprenant :
une boîte d'engrenages différentiels (10) comprenant un premier (12), un deuxième (14), un troisième (17) et un quatrième (16) engrenage conique, un arbre d'entrée (11), un arbre de sortie (13) et un carter d'engrenages différentiels (20),
l'arbre d'entrée (11) étant raccordé intégralement au premier engrenage conique (12),
l'arbre de sortie (13) étant raccordé intégralement au deuxième engrenage (14), l'arbre de sortie (13) étant aligné sur un axe de l'arbre d'entrée (11),
le carter d'engrenages différentiels (20) supportant les troisième (17) et quatrième (16) engrenages coniques engrenés avec les premier (12) et deuxième (14) engrenages coniques, le carter d'engrenages différentiels (20) pouvant tourner sur l'axe de l'arbre d'entrée (11), et
un moteur (M) placé à l'extérieur du carter d'engrenages différentiels (20), le moteur (M) faisant tourner le carter d'engrenages différentiels (20) autour de l'axe de l'arbre d'entrée (11) pour faire varier un rapport entre un angle de rotation de l'arbre d'entrée (11) et un angle de rotation de l'arbre de sortie (13),
**caractérisé en ce que**
un moyen pour ajuster une position du troisième engrenage conique (17) dans une direction axiale et le troisième engrenage conique (17) est disposé dans le carter d'engrenages différentiels (20).

2. Mécanisme d'angle de braquage variable (1) selon la revendication 1, dans lequel les troisième (17) et quatrième (16) engrenages coniques sont supportés en rotation par le carter d'engrenages différentiels (20), les troisième (17) et quatrième (16) engrenages coniques pouvant tourner sur un axe perpendiculaire à un axe de l'arbre d'entrée (11) et les troisième (17) et quatrième (16) engrenages coniques s'engrenant avec les premier (12) et deuxième (14) engrenages coniques.

3. Mécanisme d'angle de braquage variable (1) selon la revendication 2, dans lequel un moyen pour pousser le troisième engrenage conique (17) vers le quatrième engrenage conique (16) est disposé dans le carter d'engrenages différentiels (20).

4. Mécanisme d'angle de braquage variable (1) selon la revendication 1, dans lequel l'arbre de sortie (13) est raccordé à un pignon (52) d'un mécanisme à crémaillère (51), une crémaillère (53) du mécanisme à crémaillère (51) étant raccordée à une roue, la crémaillère s'engrenant avec le pignon (52) de sorte qu'une direction de rotation de l'arbre de sortie (13) est opposée à une direction de virage des roues directrices du véhicule.

5. Mécanisme d'angle de braquage variable (1) selon la revendication 1, dans lequel le moyen pour ajuster la position du troisième engrenage conique (17) comprend une vis de réglage (36) qui est raccordée à un arbre du troisième engrenage conique (17) et un trou de vis (37) du carter de différentiel (20) qui est vissé avec la vis de réglage (36).

6. Mécanisme d'angle de braquage variable (1) selon la revendication 5, dans lequel le moyen pousser le troisième engrenage conique (17) comprend une plaque annulaire (32) qui est disposée entre le troisième engrenage conique (17) et le carter de différentiel (20) tout en étant déformée pour prendre la forme d'un disque conique.

7. Mécanisme d'angle de braquage variable (1) selon la revendication 2, dans lequel un arbre de butée (15) est disposé entre l'arbre d'entrée (11) et l'arbre de sortie (13) pour maintenir les positions réglées des premier (12) et deuxième (14) engrenages coniques, un palier de butée (15a) étant disposé entre l'arbre de butée (15) et le premier engrenage conique (12).

8. Mécanisme d'angle de braquage variable (1) selon la revendication 1, dans lequel le carter d'engrenages différentiels (20) fonctionne comme un arbre de braquage variable et est supporté en rotation par les arbres d'entrée et de sortie (11, 13) au moyen de paliers.

9. Un appareil de contrôle de braquage comprenant:
un roue directrice (2);
un mécanisme d'angle de braquage variable (1) comprenant une boîte d'engrenages différentiels (10) comprenant un premier (12), un deuxième (14), un troisième (17) et un quatrième (16) engrenage conique, un arbre d'entrée (11), un arbre de sortie (13) et un carter d'engrenages différentiels (20), l'arbre d'entrée (11) étant raccordé au premier engrenage conique (12) et à la roue directrice (2), l'arbre de sortie (13) étant raccordé intégralement au deuxième engrenage (14), l'arbre de sortie (13) étant aligné sur un axe de l'arbre d'entrée (11), le carter boîte d'engrenages différentiels (20) supportant les troisième (17) et quatrième (16) engrenages coniques engrenés avec les premier (12) et deuxième (14) engrenages coniques, le carter d'engrenages différentiels (20) pouvant tourner sur l'axe du premier arbre (11);
un moteur (M) placé à l'extérieur du carter d'engrenages différentiels (20), le moteur (M) faisant tourner le carter d'engrenages différentiels (20) autour de l'axe de l'arbre d'entrée (11) pour faire varier un rapport entre un angle de rotation de l'arbre d'entrée (11) et un angle de rotation de l'arbre de sortie (13);
un mécanisme à crémaillère (51) raccordé à l'arbre de sortie (13),
**caractérisé en ce que**
un moyen pour ajuster une position du troisième engrenage conique (17) dans une direction axiale et le troisième engrenage conique (17) est disposé dans le carter d'engrenages différentiels (20).
